# EUROPEAN PATENT APPLICATION

(11) **EP 4 807 719 A1**
(43) Date of publication of application: **16.09.2026**
(21) Application number: 24901060.4
(22) Date of filing: 04.12.2024
(51) Int. Cl.: G09G 3/20, G09G 5/00, G06F 1/3206, H04N 9/64

(54) **ELECTRONIC DEVICE AND METHOD FOR IMAGE COMPENSATION USING COLOR INFORMATION, AND NON-TRANSITORY STORAGE MEDIUM**

(30) Priority: 04.12.2023 KR 20230173778; 26.01.2024 KR 20240012370
(71) Applicant: Samsung Electronics Co., Ltd., Suwon-si, Gyeonggi-do 16677 (KR)
(72) Inventor: KIM, Jongah, Suwon-si Gyeonggi-do 16677 (KR); PARK, Chanhyoung, Suwon-si Gyeonggi-do 16677 (KR); YOON, Heewoong, Suwon-si Gyeonggi-do 16677 (KR); LEE, Kihyuk, Suwon-si Gyeonggi-do 16677 (KR); LEE, Donghan, Suwon-si Gyeonggi-do 16677 (KR); CHOI, Gwangho, Suwon-si Gyeonggi-do 16677 (KR)
(74) Representative: Appleyard Lees IP LLP
(86) International application number: PCT/KR2024/019711
(87) International publication number: WO 2025/121874

(57) **Abstract**

The present document relates to an electronic device, a method for image compensation in the electronic device, and a non-transitory storage medium. According to one embodiment, the electronic device can: on the basis that a sleep state of a first processor of the electronic device is released, set, on a display of the electronic device, a first region of interest set including a plurality of regions of interest; acquire first color information about the set first region of interest set, while the sleep state is released; compensate, on the basis of the acquired first color information, an image displayed on the display; on the basis of that the stopping of the image while the sleep state is released is identified, set, on the display, a second region of interest set including a plurality of regions of interest before entering the sleep state; acquire the first color information about the first region of interest set; acquire second color information about the second region of interest set on the basis of entering the sleep state; and compensate the image on the basis of the first color information and the second color information. Other various embodiments are also possible.

## Description

### [Technical Field]

The disclosure relates to an electronic device including an illumination sensor, a method for image compensation in the electronic device, and a non-transitory storage medium.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function for mobile banking, and a schedule management or electronic wallet function are being integrated into a single electronic device. Such electronic devices are being downsized so that a user may conveniently carry them.

An electronic device may measure an illuminance (e.g., an illuminance value of external light) of the environment in which the electronic device is positioned through an illuminance sensor. The electronic device may adjust the luminance of the display based on the illuminance measured through the illuminance sensor.

The illuminance sensor may be disposed under the display (e.g., the rear surface of the display) when viewed from the front surface (e.g., the surface where the display of the electronic device is exposed) of the electronic device. As a result, the illuminance value measured by the illumination sensor may include an illuminance value affected by external light incident from outside the electronic device (hereinafter referred to as "external light"), and an illuminance value affected by light emitted from the display (hereinafter referred to as "display light") (hereinafter also referred to as "display light estimation value"). Accordingly, the electronic device may obtain (e.g., calculate) the illuminance value (e.g., pure ambient brightness) affected by the external light incident from outside the electronic device by subtracting the illuminance value affected by the display light from the illuminance value measured through the illuminance sensor, using image color Information (e.g., color on pixel ratio (COPR)).

The above-described information may be provided as related art for the purpose of assisting in understanding the disclosure. No claim or determination is made as to whether any of the foregoing is applicable as background art in relation to the disclosure.

### [Detailed Description of the Invention]

### [Technical Solution]

The display light estimation value affected by display light may be obtained (e.g., calculated) based on color information (e.g., color on pixel ratio (COPR)) of an image displayed through the display. The color information of the image may be obtained from a display driver integrated circuit (DDI) for controlling the display.

In order to obtain color information of an image, coordinates of a region of interest, which is a partial area of the image, need to be input to a display (e.g., a display panel) by a display driver IC. Conventionally, coordinates for obtaining color information were input (e.g., written) once at booting of an electronic device and used without change in a fixed manner. Because the display driver IC of the electronic device has a limited memory capacity, a limited number of regions of interest including coordinate values are used, resulting in decreased image compensation accuracy.

According to an embodiment, an electronic device includes sensor circuitry including an illumination sensor, a display including display driving circuitry, memory storing instructions, a first processor, and a second processor, and the instructions, when executed by at least one of the first processor or the second processor individually or collectively, cause the electronic device to, based on a sleep state of the first processor being released, set a first region-of-interest set including a plurality of regions of interest on the display, obtain first color information for the first region-of-interest set, and compensate an image displayed on the display based on the obtained first color information.

According to an embodiment, the instructions may be configured to, when executed by at least one of the first processor or the second processor individually or collectively, cause the electronic device to, based on identifying that the image is stopped during release of the sleep state, set a second region-of-interest set including a plurality of regions of interest on the display before entering the sleep state, and obtain the first color information for the first region-of-interest set.

According to an embodiment, the instructions may be configured to, when executed by at least one of the first processor or the second processor individually or collectively, cause the electronic device to, based on entering the sleep state, obtain second color information for the second region-of-interest set, and compensate the image based on the first color information and the second color information.

According to an embodiment, a method for operating an electronic device includes an operation of setting a first region-of-interest set including a plurality of regions of interest on a display of the electronic device based on a sleep state of a first processor of the electronic device being released, and an operation of obtaining first color information for the first region-of-interest set and compensating an image displayed on the display based on the obtained first color information, during release of the sleep state.

According to an embodiment, the method may include an operation of setting a second region-of-interest set including a plurality of regions of interest on the display before entering the sleep state, and obtaining the first color information for the first region-of-interest set, based on identifying that the image is stopped during release of the sleep state.

According to an embodiment, the method may include an operation of obtaining second color information for the second region-of-interest set based on entering the sleep state, and compensating the image based on the first color information and the second color information.

According to an embodiment, in a non-transitory storage medium storing a program, the program may include executable instructions that, when executed by at least one of a first processor or a second processor of an electronic device, cause the processor to perform an operation of setting a first region-of-interest set including a plurality of regions of interest on a display of the electronic device based on a sleep state of the first processor of the electronic device being released, an operation of obtaining first color information for the first region-of-interest set and compensating an image displayed on the display based on the obtained first color information, during release of the sleep state, an operation of setting a second region-of-interest set including a plurality of regions of interest on the display before entering the sleep state and obtaining the first color information for the first region-of-interest set, based on identifying that the image is stopped during release of the sleep state, and an operation of obtaining second color information for the second region-of-interest set based on entering the sleep state, and compensating the image based on the first color information and the second color information.

### [Brief Description of Drawings]

FIG. 1 is a block diagram illustrating an electronic device in a network environment according to various embodiments.
FIG. 2 is a view illustrating an example configuration of an electronic device according to an embodiment;
FIG. 3 is a view illustrating a configuration of an electronic device according to an embodiment.
FIG. 4 is a view illustrating a configuration of an electronic device according to an embodiment.
FIG. 5 is a view illustrating a configuration of a software module of an electronic device according to an embodiment.
FIG. 6 is a view illustrating an example of region-of-interest sets of an electronic device according to an embodiment.
FIG. 7 is a view illustrating an example of an operation of an electronic device according to an embodiment.
FIG. 8 is a view illustrating an example of an operation of an electronic device according to an embodiment.
FIG. 9 is a view illustrating an example of an operation of an electronic device according to an embodiment.
FIG. 10 is a flowchart illustrating an example of an operation method in an electronic device according to an embodiment.
FIG. 11 is a flowchart illustrating an example of an operation method in an electronic device according to an embodiment.
FIG. 12 is a flowchart illustrating an example of a method for operating an electronic device according to an embodiment.
FIG. 13 is a view illustrating an example of graphs comparing effects in an electronic device according to an embodiment.

In connection to the description of the drawings, the same or similar reference numerals may be used for the same or similar components.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions. As used herein, the term "user" may denote a human or another device (e.g., an artificial intelligent electronic device) using the electronic device.

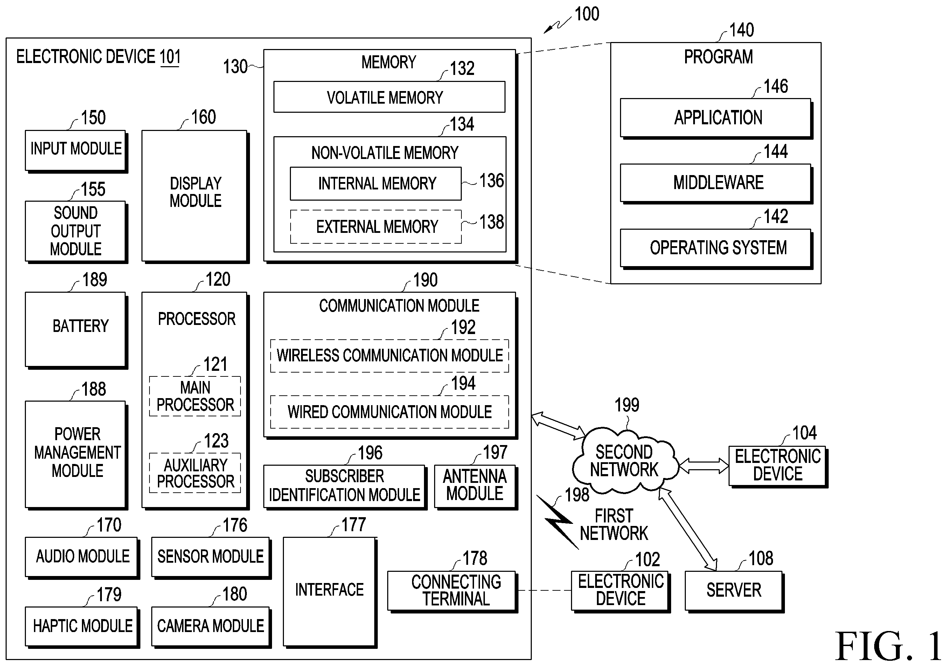

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GMS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

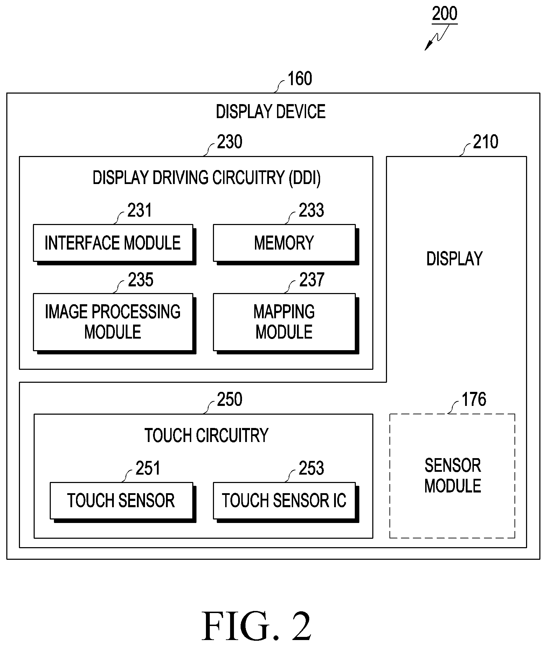

FIG. 2 is a block diagram 200 illustrating a display module 160 according to an embodiment.

Referring to FIG. 2, the display module 160 may include a display 210 and display driving circuitry (e.g., a display driver integrated circuit (DDI) 230) for controlling the display 210. The display driving circuitry 230 may include an interface module 231, memory 233 (e.g., buffer memory), an image processing module 235, or a mapping module 237. The display driving circuitry 230 may receive image information including image data or an image control signal corresponding to a command for controlling the image data from another component of the electronic device 101 through the interface module 231. For example, image information may be received from a processor (e.g., the processor 120 of FIG. 1 (e.g., the main processor 121 of FIG. 1) (e.g., an application processor)) or an auxiliary processor (e.g., the auxiliary processor 123 of FIG. 1 (e.g., a graphic processing device)) operated independently from the function of the main processor. The display driving circuitry 230 may communicate with touch circuitry 250 or the sensor module 176 through the interface module 231. Further, the display driving circuitry 230 may store at least a portion of the received image information in the memory 233, e.g., in units of frames. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 135. According to an embodiment, the generating of the voltage value or current value may be performed, for example, based at least in part on one or more attributes of the pixels (e.g., an array, such as an RGB stripe or a pentile structure, of the pixels, or the size of each subpixel) of the display 210. At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor IC 253 may detect (e.g., measure) a change in a signal (e.g., a voltage, a quantity of light, a resistance, or a quantity of one or more electric charges) corresponding to the certain position on the display 210. The touch sensor IC 253 may provide input information (e.g., a position, an area, a pressure, or a time) indicative of the touch input or the hovering input detected to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In this case, the at least one sensor or a control circuit therefor may be embedded in a portion of the display module 160 (e.g., the display 210 or the display driving circuitry 230) or a portion of the touch circuitry 250. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

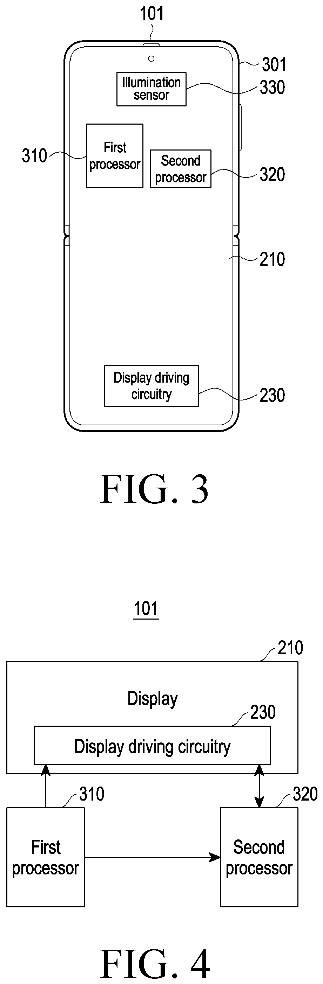

FIG. 3 is a view illustrating a configuration of an electronic device according to an embodiment, and FIG. 4 is a view illustrating a configuration of an electronic device according to an embodiment.

Referring to FIGS. 1, 2, 3, and 4, the electronic device 101 (e.g., the electronic device 101 of FIGS. 1 and 2) may include a housing 301 and, within a space formed by the housing 301, a display (e.g., a flexible display) 210, display driving circuitry 230 (e.g., a display driver integrated circuit (DDI)), a first processor 310, a second processor 320, and an illumination sensor 330. According to an embodiment, the first processor 310 may be an application processor (e.g., AP), and the second processor 320 may be a sensor hub processor.

According to an embodiment, the housing 301 may also be referred to as a foldable housing, and is not limited thereto and may also be referred to as another type of housing such as a slidable housing. According to an embodiment, the electronic device 101 may further include a rear display (not illustrated) on a portion of a rear surface of the electronic device 101. According to an embodiment, the housing 301 may form at least a portion of an exterior of the electronic device 101. According to an embodiment, a surface on which the display 210 is visually exposed is defined as a front surface (e.g., a first surface) of the electronic device 101 and/or the housing 301. A surface opposite to the front surface is defined as a rear surface (e.g., a second surface) of the housing 301 of the electronic device 101. A surface surrounding at least a portion of a space between the front surface and the rear surface is defined as a side surface (e.g., a third surface) of the housing 301 of the electronic device 101.

According to an embodiment, the display 210 (e.g., the display module 160 of FIGS. 1 and 2 or the display 210 of FIG. 2) may visually provide information to an external entity (e.g., a user) of the electronic device 101. The display 210 may include, for example, a hologram device, or a projector and control circuitry to control a corresponding one of the display, hologram device, and projector. According to an embodiment, the display 210 may include a touch sensor configured to detect a touch, or a pressure sensor configured to measure an intensity of a force generated by a touch, and may be combined with or disposed adjacent to a digitizer configured to detect a magnetic field-based stylus pen. The display 210 may be a display in which at least a partial area may be transformed into a flat surface or a curved surface. According to an embodiment, the display 210 may be controlled by the display driving circuitry 230 (e.g., the DDI 230 of FIG. 2). In an embodiment, the display 210 may be driven in a pulse width modulation (PWM) scheme. For example, while displaying a screen, the display 210 may be periodically turned on/off based on a set duty cycle and a screen refresh rate.

According to an embodiment, the display driving circuitry (DDI) 230 is identical or similar to the display driving circuitry (DDI) 230 of FIG. 2, and thus redundant description thereof is omitted.

According to an embodiment, the display driving circuitry 230 may transmit color information of an image displayed through the display 210 to the second processor 320. According to an embodiment, the color information of the image may include color on pixel ratio (COPR) information of the image. In an embodiment, the color information of the image displayed through the display 210 may be color information of a portion of the image displayed through regions of interest (e.g., partial areas of a display panel) set on the display 210 within the image displayed through the display 210. However, the disclosure is not limited thereto, and the color information of the image displayed through the display 210 may be color information of an entire image displayed through an entire area of the display 210. According to an embodiment, the display driving circuitry 230 may control the display 210 to display an image in units of frames (e.g., image frames), and transmit the color information (e.g., COPR information) of the image to the second processor 320 each time the frame is reproduced. Because an area of the display affecting the illumination sensor 330 appears brighter in a central portion than in an edge portion even with the same color from a perspective of the illumination sensor, image compensation accuracy may be increased when the area of the display affecting the illumination sensor is divided and segmented to designate a plurality of regions of interest, and more weight is given to an area (e.g., a region of interest) located in the center.

According to an embodiment, the color information of the portion of the image displayed through the regions of interest set on the display 210 may include red, green, and blue (RGB) values of the portion of the image to be displayed through the set regions of interest. For example, the color information of the portion of the image displayed through the set regions of interest may include an average of R values, an average of G values, and an average of B values displayed by pixels included in the regions of interest set on the display 210.

According to an embodiment, the first processor 310 may be a processor (e.g., AP) managing overall operation of the device, and may perform a function related to data transmission between applications or brightness adjustment. The first processor 310 may enter a sleep state (e.g., hibernation or power-saving mode) when an image update (e.g., an image change) does not occur for 3 frames, and may perform a function of exiting the sleep state (e.g., releasing the sleep state) when an image update (e.g., an image change) occurs. Because the first processor 310 may not set or change a region-of-interest set (e.g., coordinate values of regions of interest) for obtaining color information in the display driving circuitry 230 when entering the sleep state, when a situation (e.g., image stop) requiring setting or changing the region-of-interest set before entering the sleep state occurs, the first processor 310 may request the display driving circuitry 230 to set or change the region-of-interest set before entering the sleep state (e.g., at a time when 2 frames have passed, which is 3 frames before the time of the image stop, before entering the sleep state at time t6).

According to an embodiment, the second processor 320 may be a processor (e.g., a sensor hub) for controlling the illumination sensor with low power on behalf of the first processor 310, and may obtain color information (e.g., a COPR value) from the display driving circuitry 230 and compensate the image using a specified image compensation algorithm based on the obtained color information. The second processor 320 may obtain only first color information for the first region-of-interest set (ROI set1) while the first processor 310 is in an activated state in which the sleep state is released, and perform an image compensation operation using the obtained first color information. The second processor 320 may obtain both the first color information for the first region-of-interest set (ROI set1) and second color information for the second region-of-interest set (ROI set2) while the first processor 310 is in the sleep state, and perform an image compensation operation using the obtained first color information and second color information. The second processor 320 may obtain only the first color information in specific situations (e.g., a first situation and/or a second situation), and perform an image compensation operation using the first color information. The first situation may be a situation in which the sleep state is released and the first processor 310 re-enters the sleep state (e.g., enters the sleep state about 100 ms before the request for setting or changing the first region-of-interest set) before the second processor 320 obtains the color information of the first region-of-interest set. The second situation may be a situation in which an image change occurs within about 100 ms after a request for setting or changing the second region-of-interest set upon entering the sleep state.

According to an embodiment, the illumination sensor 330 (e.g., the sensor module 176 of FIG. 1) may be disposed below a disposition area of the display 210 (e.g., a display panel) (e.g., on a rear surface of the display) or to overlap at least a partial area thereof.

In an embodiment, the illumination sensor 330 (light sensor) (also referred to as "ambient light sensor") may include a light receiving unit (e.g., a photo diode element) for reading RGB values of visible light (e.g., light having a wavelength of about 400 nm to 750 nm) and an analog to digital converter (ADC) for digitizing the RGB values. According to an embodiment, the light receiving unit may include a photodiode responsive to visible light and may include a plurality of channels capable of measuring light. The light receiving unit may further include a photodiode receiving infrared light. For example, the light receiving unit may include an R (red) channel receiving reddish light (e.g., light having a wavelength of about 550 nm to 700 nm), a G (green) channel receiving greenish light (e.g., light having a wavelength of about 450 nm to 650 nm), a B (blue) channel receiving bluish light (e.g., light having a wavelength of about 400 nm to 550 nm), and/or a C (clear) channel receiving white light (e.g., all of R, G, and B). At least one of the plurality of channels may include a photodiode. Each of the plurality of channels may include a filter transmitting light of the corresponding color. In an embodiment, the ADC may convert analog data transmitted from the light receiving unit into digital data (e.g., an ADC value). In an embodiment, the ADC may include one or more ADCs. For example, the ADC may include a first ADC sampling data transmitted from the light receiving unit at a first period and a second ADC sampling data transmitted from the light receiving unit at a second period different from the first period.

In an embodiment, the illumination sensor 330 may include a sensor using an intensity of light incident from the outside, such as a visible light sensor, a proximity illumination sensor (also referred to as a "proximity light sensor"), a spectrometer sensor, an ultraviolet sensor, or a color sensor. According to an embodiment, the illumination sensor 330 may be implemented in a package form further including a light emitting unit. For example, when the illumination sensor 330 includes a light emitting unit, the illumination sensor 330 may operate as a proximity sensor. According to an embodiment, the illumination sensor 330 may detect external light passing through the display 210 (e.g., a glass and a display panel) to measure external illumination. According to an embodiment, the illumination sensor 330 may be included in the display 210. For example, at least some of the pixels included in the display 210 may include a light receiving unit to measure illumination. In an embodiment, the illumination sensor 330 may be affected during illumination measurement by a transmittance of external light by the display 210 and/or a screen displayed on the display 210.

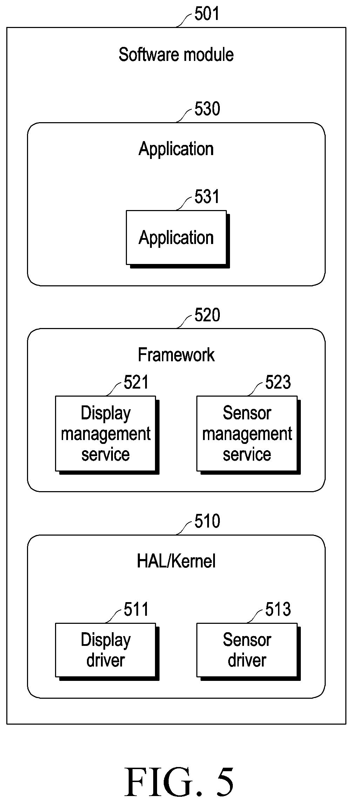

FIG. 5 is a view illustrating a configuration of a software module of an electronic device according to an embodiment.

Referring to FIGS. 1 to 5, the electronic device 101 according to an embodiment may implement a software module 501 (e.g., the program 140 of FIG. 1) for performing operations related to image reproduction and compensation. The memory 130 of the electronic device 101 may store commands (e.g., instructions) for implementing the software module 501 of FIG. 5. At least one processor (e.g., the processor 120 of FIG. 1, the first processor 310 of FIGS. 3 and 4, and the second processor 320 of FIGS. 3 and 4) may execute the instructions stored in the memory (e.g., the memory 130 of FIG. 1) to implement the software module 501 illustrated in FIG. 5 and may control hardware (e.g., the sensor module 176, the display module 160, or the communication module 190 of FIG. 1) associated with a function of the software module 501.

The software module 501 of the electronic device 101 according to an embodiment may be configured to include a kernel (or a hardware abstraction layer (HAL)) 510, a framework (e.g., the middleware 144 of FIG. 1) 520, and an application 530 (e.g., the application 146 of FIG. 1). At least a portion of the software module 501 may be preloaded on the electronic device 101 or may be downloaded from a server (e.g., the server 108).

According to an embodiment, the kernel 510 may be configured to include a display driver 511 and a sensor driver 513, and is not limited thereto and may further include another driver or module related to an image reproduction and compensation operation. The kernel 510 may include, e.g., a system resource manager or a device driver. The system resource manager may perform at least one of control, allocation, or recovery of system resources. The device driver may include, e.g., a display driver, a camera driver, a Bluetooth driver, a shared memory driver, a USB driver, a keypad driver, a Wi-Fi driver, an audio driver, or an inter-process communication (IPC) driver.

According to an embodiment, the framework 520 may be configured to include, e.g., a display management service 521 and a sensor management service 523, and is not limited thereto and may be configured to further include another module. The framework 520 may provide functions commonly required by the application 530, or provide various functions to the application 530 through an application programming interface (API) (not illustrated) so that the application 530 may efficiently use limited system resources within the electronic device 101. The framework 520 may include a module that forms a combination of various functions of the above-described components. The framework 520 may provide a specified module per type of the operating system in order to provide a differentiated function. The framework 520 may dynamically omit some existing components or add new components.

According to an embodiment, the application 530 may be configured to include an application (e.g., a module, manager, or program) related to image reproduction and compensation. The application 530 may include an application received from an external electronic device (e.g., the server 108 or the electronic device 102, 104). According to an embodiment, the application 530 may include a preloaded application or a third party application downloadable from a server. According to the illustrated embodiment, the components of the software module 501 and the names of the components may be varied depending on the type of the operating system. According to an embodiment, at least a portion of the software module 501 may be implemented by software, firmware, hardware, or a combination of at least two thereof. At least a portion of the software module 501 may be implemented (e.g., executed) by, e.g., a processor (e.g., the first processor (AP) 310 of FIGS. 3 and 4). At least a portion of the software module 501 may include, e.g., at least one of a module, a program, a routine, a set of instructions, or a process for performing at least one function.

As described above, in an embodiment, main components of the electronic device have been described through the electronic device 101 of FIGS. 1, 2, 4, and 5. However, in various embodiments, not all of the components illustrated in FIGS. 1, 2, 4, and 5 are essential components, and the electronic device 101 may be implemented by more components than those illustrated or by fewer components than those illustrated. Further, locations of the main components of the electronic device 101 described above through FIGS. 1, 2, 4, and 5 may be changed according to various embodiments.

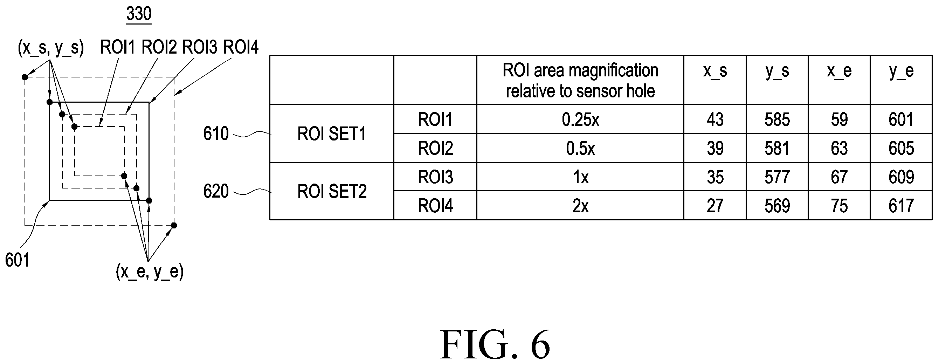

FIG. 6 is a view illustrating an example of region-of-interest sets of an electronic device according to an embodiment.

Referring to FIGS. 3, 4, and 6, the electronic device 101 (e.g., the electronic device 101 of FIG. 1) according to an embodiment may divide a partial area of the display 210 (e.g., the display module 160 of FIG. 1, the display module 160 of FIG. 2, or the display 210 of FIG. 2) to pre-designate a plurality of regions of interest (ROI1, ROI2, ROI3, and/or ROI4), and designate location information (e.g., coordinate (x, y) values) for each of the designated plurality of regions of interest. The electronic device 101 may store the location information (hereinafter referred to as region-of-interest location information) for each of the plurality of regions of interest in the memory (e.g., the memory 130 of FIG. 1). The plurality of regions of interest including the location information may be divided into a first region-of-interest set (ROI SET1) 610 and a second region-of-interest set (ROI SET2) 620 and configured in a table form. For example, a first region of interest (ROI1) and a second region of interest (ROI2) may be classified as the first region-of-interest set 610, and a third region of interest (ROI3) and a fourth region of interest (ROI4) may be classified as the second region-of-interest set 620. The location information for each of the regions of interest may include, e.g., a coordinate value (x_s, y_s) of an upper-left point of the region of interest and a coordinate value (x_e, y_e) of a lower-right point, and is not limited thereto and may be configured by additionally or alternatively setting coordinate values of other points of the region of interest. According to an embodiment, the electronic device 101 may distinguish the first region-of-interest set 610 and the second region-of-interest set 620 based on a reference area (e.g., an area magnification of 1x relative to an illumination sensor hole as an area magnification) corresponding to an area of a hole 601 (e.g., ROI3) of the illumination sensor 330. The electronic device 101 may designate the first region-of-interest set 610 including a plurality of regions of interest (e.g., ROI1 and ROI2) having an area magnification smaller than the area magnification (1x) of the hole 601 of the illumination sensor 330 (e.g., 0.25x magnification and 0.5x magnification), and the second region-of-interest set 620 including a plurality of regions of interest (e.g., ROI3 and ROI4) having an area magnification larger than or equal to the area of the hole 601 of the illumination sensor 330 (e.g., 1x magnification and 2x magnification). The first region-of-interest set (ROI SET1) 610 may include a first region of interest (ROI1) having first region-of-interest location information (e.g., x_s(43), y_s(585), x_e(59), y_e(601)) and a second region of interest (ROI2) having second region-of-interest location information (e.g., x_s(39), y_s(581), x_e(63), y_e(605)). The second region-of-interest set (ROI SET2) 620 may include a third region of interest (ROI3) having third region-of-interest location information (e.g., x_s(35), y_s(577), x_e(67), y_e(609)) and a fourth region of interest (ROI4) having fourth region-of-interest location information (e.g., x_s(27), y_s(569), x_e(75), y_e(617)). The first region-of-interest set (ROI SET1) 610 and the second region-of-interest set (ROI SET2) 620 may each include a maximum number of ROIs that the display driving circuitry (DDI) 230 may provide. Because the illumination sensor 330 is located at the center of the hole 601, light from the display 210 may be incident uniformly in all directions, and thus the regions of interest may be designated in the form extending from the center of the hole 601. Because an effect on the sensor unit proportionally decreases as a distance from the center increases even when the same color is displayed, compensation may be performed by giving different weights to each of the divided regions of interest. Because the COPR value included in the color information that appears to overlap regions of interest represents an average value within the region of interest, a weight may be given by subtracting the COPR value of the overlapping portion through a formula. For example, the first region of interest (roi1) and the second region of interest (roi2) have area magnifications of 0.25x and 0.5x, respectively, and thus have an area magnification ratio of 1:2, and a value COPR₍ᵣₒᵢ₂₋ᵣₒᵢ₁₎ obtained by subtracting the COPR value of the first region of interest (roi1) from the COPR value of the second region of interest (roi2) may be calculated as a value divided by the area ratio (e.g., 2-1) as illustrated in Equation 1 below.${COPR}_{\left(roi2-roi1\right)} = \left(2*roi2-1*roi1\right) / \left(2-1\right)$

Equation 1 is only an example for helping understanding, and embodiments of the disclosure may not be limited thereto. For example, Equation 1 may be modified, applied, or extended in various ways.

According to an embodiment, the electronic device 101 may identify the number of regions of interest supported for use (e.g., provided by the electronic device) by the display driving circuitry based on, e.g., manufacturer and version information of the display driving circuitry or accuracy of the image.

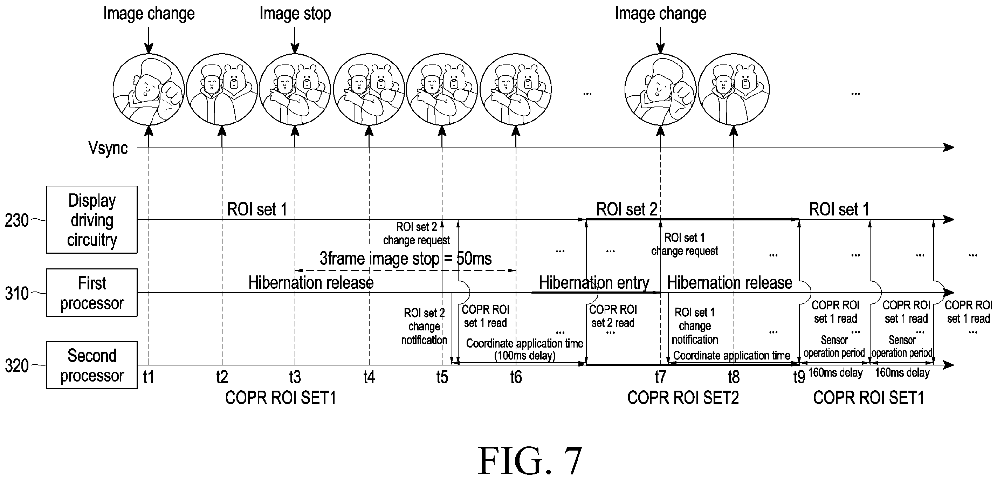

FIG. 7 is a view illustrating an example of an operation of an electronic device according to an embodiment.

Referring to FIGS. 3, 4, 6, and 7, when the first processor 310 (e.g., AP) of the electronic device 101 according to an embodiment displays an image on the display 210 after the electronic device 101 is powered on, the first processor 310 enters an activated state in which the sleep state is released (e.g., a hibernation released state) and may identify whether an image change occurs. When the first processor 310 identifies that an image change occurs, the first processor 310 may control the display driving circuitry 230 to maintain the activated state and maintain a set (e.g., the first region-of-interest set 610 (ROI set 1) of FIG. 6) set by the display driving circuitry 230. When the first processor 310 identifies that image stop occurs at time t3, the first processor 310 may request the display driving circuitry 230 to change the set (e.g., the first region-of-interest set 610 (ROI set 1) of FIG. 6) to another set (e.g., the second region-of-interest set 620 (ROI set 2) of FIG. 6), and enter the sleep state (e.g., hibernation).

According to an embodiment, when the sleep state is released, the first processor 310 may request the display driving circuitry 230 to set (e.g., change, apply, or write) the first region-of-interest set on the display 210. The first processor 310 may transmit notification information (e.g., first notification information) indicating that setting of the first region-of-interest set has been requested to the second processor 320 (e.g., sensor hub). Without being limited thereto, upon receiving a request for setting the first region-of-interest set 610 from the first processor 310, the display driving circuitry 230 may transmit the notification information to the second processor 320. For example, the notification information may include identification information (e.g., "1" or "set1") indicating the first region-of-interest set. According to an embodiment, upon receiving the request for setting the first region-of-interest set 610, the display driving circuitry 230 may perform a setting or changing operation of the first region-of-interest set 610. The display driving circuitry 230 may set (e.g., change, apply, or write) coordinates of the regions of interest on the display 210 based on a plurality of pieces of region-of-interest location information included in the first region-of-interest set 610 during a coordinate application time, and complete the setting or changing operation of the first region-of-interest set 610 as the coordinates are applied when the coordinate application time elapses. The display driving circuitry 230 may periodically check the first color information (e.g., a COPR value) for the first region-of-interest set 610 at a specified period (e.g., about 160 ms). The second processor 320 may obtain the first color information (e.g., a COPR value) for the first region-of-interest set 610 from the display driving circuitry 230 at each specified period (e.g., about 160 ms), and compensate the image using a specified image compensation algorithm based on the obtained first color information. The second processor 320 may obtain the first color information at a specified period (e.g., a sensor operation period (e.g., about 160 ms)).

Referring to FIG. 7 for a more detailed description, when the first processor 310 according to an embodiment identifies that the image is stopped during a period t3-t5 while the sleep state is released during a period t1-t3, the first processor 310 may request the display driving circuitry 230 to set (e.g., change, apply, or write) the second region-of-interest set 620 (e.g., ROI set 2) at time t5, and transmit notification information (e.g., second notification information) to the second processor 320 for notifying that setting (e.g., changing or writing) of the second region-of-interest set has been requested to the display driving circuitry 230. Without being limited thereto, upon receiving a request for setting the second region-of-interest set 620 from the first processor 310, the display driving circuitry 230 may transmit the notification information to the second processor 320. For example, the notification information may include identification information (e.g., "2" or "set2") indicating the second region-of-interest set 620. The first processor 310 may generate an interrupt for changing the ROI set at a preset time or time based on a time (t3) where the image is initially stopped (e.g., a time (t5) where 2 frames, which is a frame immediately before entering the sleep state (at time t6) after image stop, are reproduced, or after the 2-frame reproduction time (t5) and before the 3-frame reproduction time (t6)), and request the display driving circuitry 230 to set (e.g., change, apply, or write) the second region-of-interest set 620.

According to an embodiment, in response to receiving the request for setting the second region-of-interest set 620 from the first processor 310 at time t5, the display driving circuitry 230 may set or change regions of interest (e.g., coordinate values of ROI3 and ROI4) for obtaining the second color information based on a plurality of pieces of region-of-interest location information included in the second region-of-interest set 620. The regions of interest may be applied to the display 210 after a delay during a specified application time (e.g., a minimum coordinate application time, about 100 ms). According to an embodiment, the second processor 320 may obtain the first color information for the currently set first region-of-interest set 610 before a specified time (e.g., between t5-t6) (e.g., about 50 ms of a 3-frame image stop time during the period t3-t6). According to an embodiment, the first processor 310 may enter the sleep state (hibernation) at time t6 as the image is stopped for a specified time (e.g., about 50 ms during the period t3-t6). When the second processor 320 identifies that setting of the second region-of-interest set 620 is completed by the display driving circuitry 230 after time t6, the second processor 320 may obtain the second color information for the second region-of-interest set 620 from the display driving circuitry 230, and compensate the image based on the first color information and the second color information.

When the first processor 310 according to an embodiment identifies an image change from the sleep state again at time t7, the first processor 310 may release the sleep state (e.g., switch to the activated state), request the display driving circuitry 230 to set (e.g., change, apply, or write) the first region-of-interest set 610, and transmit notification information to the second processor 320 for notifying that setting (e.g., changing or writing) of the first region-of-interest set 610 has been requested. Without being limited thereto, upon receiving a request for setting the first region-of-interest set 610 from the first processor 310, the display driving circuitry 230 may transmit the notification information to the second processor 320.

According to an embodiment, the first processor 310 may identify an image change continuously at time t8 and maintain a state in which the sleep state is released (e.g., the activated state). The display driving circuitry 230 may set (e.g., change, apply, or write) the regions of interest on the display 210 based on a plurality of pieces of region-of-interest location information included in the first region-of-interest set 610 at time t9 after a delay during the coordinate application time (the period t7-t9 time (e.g., about 100 ms)), and periodically check the first color information (e.g., a COPR value) for the first region-of-interest set 610 at a specified period (e.g., about 160 ms) after time t9. The second processor 320 may obtain the first color information (e.g., a COPR value) for the first region-of-interest set 610 from the display driving circuitry 230 at each specified period (e.g., about 160 ms) after time t9, and compensate the image based on the obtained first color information.

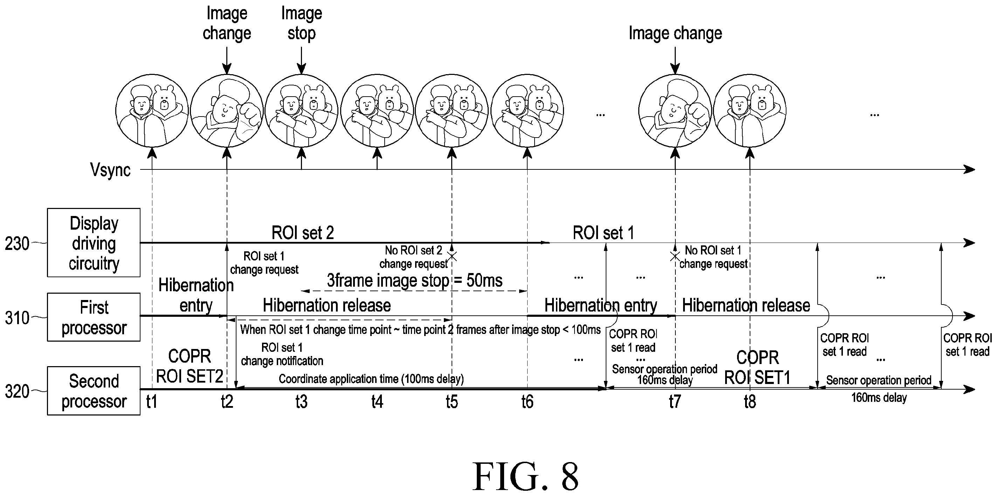

FIG. 8 is a view illustrating an example of an operation of an electronic device according to an embodiment.

Referring to FIGS. 4, 5, 6, and 8, when the first processor 310 (e.g., AP) of the electronic device 101 according to an embodiment identifies an image change from the sleep state (e.g., hibernation entry during the period t1-t2) at time t2, the first processor 310 may release the sleep state (hibernation) and request the display driving circuitry 230 to set (e.g., change, apply, or write) the first region-of-interest set 610. The display driving circuitry 230 may be in a state in which the first region-of-interest set 610 is set during the period t1-t2. After the request for setting (e.g., changing, applying, or writing) the first region-of-interest set 610, the first processor 310 may transmit notification information (e.g., ROI set 1 change notification or first notification information) to the second processor 320 for notifying that setting (e.g., changing or writing) of the first region-of-interest set 610 has been requested. Without being limited thereto, upon receiving a request for setting the first region-of-interest set 610 from the first processor 310, the display driving circuitry 230 may transmit the notification information to the second processor 320. When the first processor 310 identifies that the image is stopped (e.g., the first situation) within the coordinate application time before setting of the first region-of-interest set 610 is completed (e.g., coordinate values are applied) by the display driving circuitry 230 (e.g., at a time (t5) where the time from the ROI set1 change request time to the time when 2 frames have passed after image stop < 100 ms), the first processor 310 may not request setting (e.g., changing, applying, or writing) of the second region-of-interest set 620 at time t5 and re-enter the sleep state at time t6. Image compensation may increase accuracy when the second color information for the second region-of-interest set 620 is added only after the first color information for the first region-of-interest set 610, which is the center value of the hole of the illumination sensor, is secured before entering the sleep state. Accordingly, when the situation (e.g., the first situation) in which the second processor 320 has not secured the first color information of the first region-of-interest set 610 before entering the sleep state (the period t5-t6), the electronic device 101 may enter the sleep state by the first processor 310 at time t6 without the display driving circuitry 230 changing the region of interest (e.g., coordinates). The second processor 320 of the electronic device 101 may perform the image compensation operation using only the first color information for the first region-of-interest set 610 periodically obtained after the first processor 310 enters the sleep state at time t6, without (e.g., forgoing) obtaining the second color information of the second region-of-interest set 620 after the first processor 310 enters the sleep state. For example, if a specified first specific time (e.g., from the first region-of-interest set (ROI SET1) change request time (t2) to the time when 2 frames have passed after image stop (t5)) is less than the coordinate application time (e.g., about 100 ms), the first processor 310 may release the interrupt for ROI change and identify the situation (e.g., the first situation) in which the image is stopped within the coordinate application time (e.g., 100 ms) before setting of the first region-of-interest set 610 is completed by the display driving circuitry 230. According to an embodiment, the display driving circuitry 230 may identify that a request for setting the second region-of-interest set 620 is not received (e.g., input) from the first processor 310 within the minimum coordinate application time (e.g., the ROI set1 change request time ~ to the sleep start time < the coordinate application time), identify the request for setting the first region-of-interest set 610 as a valid state without change of the region-of-interest set, and set (e.g., change or write) the first region-of-interest set 610 at the change time (t6-1) of the first region-of-interest set 610 after the sleep state entry time (t6). The display driving circuitry 230 may periodically check the first color information (e.g., a COPR value) for the first region-of-interest set at a specified period (e.g., about 160 ms). The second processor 320 may perform image compensation using only the first color information (e.g., a COPR value) for the first region-of-interest set 610 periodically obtained from the display driving circuitry 230 after the coordinate application time (100 ms). According to an embodiment, when the first processor 310 identifies an image change at time t7 after entering the sleep state (e.g., after time t6), the first processor 310 may release the sleep state (release hibernation) (e.g., enter the activated state). Because the first region-of-interest set has been set (e.g., changed, applied, or written) by the display driving circuitry 230 before time t7, the first processor 310 may not request setting of the first region-of-interest set. According to an embodiment, the first processor 310 may identify an image change continuously at time t8 and maintain a state in which the sleep state is released (e.g., the activated state).

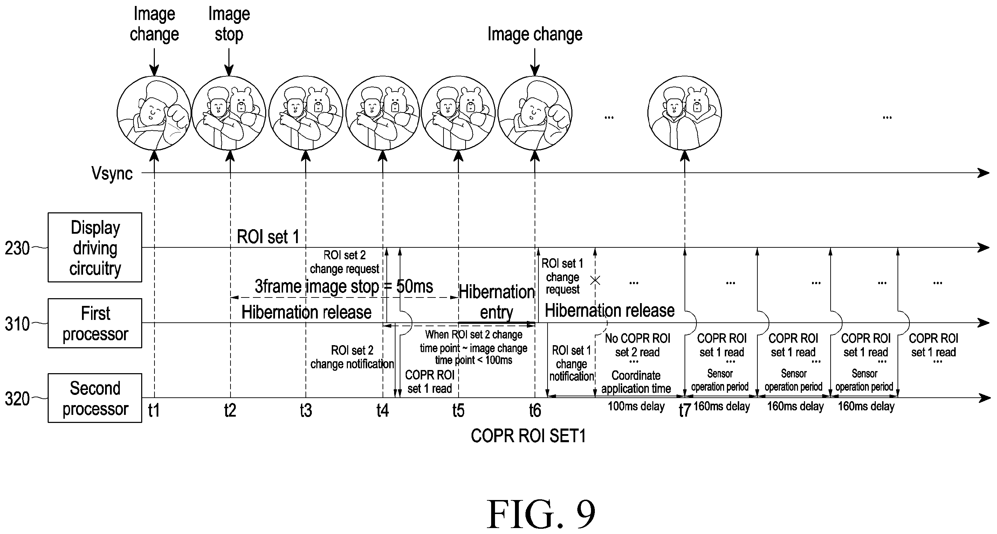

FIG. 9 is a view illustrating an example of an operation of an electronic device according to an embodiment.

Referring to FIGS. 4, 5, 6, and 9, when the first processor 310 (e.g., AP) of the electronic device 101 according to an embodiment identifies that image stop occurs during t2-t4 in a state in which the sleep state (hibernation) is released (e.g., the activated state), the first processor 310 may request the display driving circuitry 230 to set (e.g., change, apply, or write) the second region-of-interest set 620 (ROI set 2) at time t4 or immediately after t4. After the request for setting the second region-of-interest set 620 (ROI set 2), the first processor 430 may transmit notification information (e.g., second notification information) to the second processor 320 for notifying that setting (e.g., changing or writing) of the second region-of-interest set 620 has been requested. Without being limited thereto, upon receiving a request for setting the second region-of-interest set 620 from the first processor 310, the display driving circuitry 230 may transmit the notification information to the second processor 320. After setting of the second region-of-interest set 620 (ROI set 2) is requested by the first processor 430, the second processor 320 may obtain the first color information for the first region-of-interest set 610 from the display driving circuitry 230. For example, the display driving circuitry 230 may receive an ROI set change request and apply actual coordinate values of regions of interest based on a plurality of pieces of region-of-interest location information included in the requested region-of-interest set after the coordinate application time (e.g., about 100 ms) elapses. Accordingly, the coordinate values of the regions of interest may not be applied to the display 210 before the coordinate application time (e.g., before the setting operation of the second region-of-interest set 620 is completed). As illustrated in FIG. 9, when the first processor 310 enters the sleep state at time t5 and an image change occurs (e.g., an image change event is received) at time t6 before the coordinate application time (e.g., about 100 ms) elapses, the display driving circuitry 230 may not perform (e.g., complete) the setting (e.g., changing or writing) of the second region-of-interest set 620 requested at or immediately after time t4.

According to an embodiment, as illustrated in FIG. 9, when the first processor 310 enters the sleep state at time t5 and identifies (e.g., identifies the second situation) that an image change occurs (e.g., an image change event is received) before the coordinate application time elapses (e.g., before setting of the second region-of-interest set 620 is completed) at time t6 after setting regions of interest for the second region-of-interest set 620, the first processor 310 may release the sleep state. The first processor 310 may request the display driving circuitry 230 to set (e.g., change, apply, or write) the first region-of-interest set 610 at or immediately after time t6, and transmit notification information (e.g., first notification information) to the second processor 320 by the first processor 430 for notifying that setting (e.g., changing or writing) of the first region-of-interest set 610 has been requested. Without being limited thereto, upon receiving a request for setting the first region-of-interest set 610 from the first processor 310, the display driving circuitry 230 may transmit the notification information to the second processor 320. Because a request for setting the first region-of-interest set is received again before the coordinate application time elapses after time t4, the display driving circuitry 230 may maintain the setting of the first region-of-interest set 610 without applying actual coordinates of regions of interest for the second region-of-interest set 620 during the coordinate application time (e.g., about 100 ms) after time t6. The second processor 320 may periodically obtain the first color information for the first region-of-interest set 610 and perform image compensation based on the obtained first color information after time t7 when the coordinate application time (e.g., about 100 ms) elapses.

According to an embodiment, the electronic device (e.g., the electronic device 101 of FIGS. 1 to 4) may include sensor circuitry (e.g., the sensor module 176 of FIG. 1) including an illumination sensor (e.g., the illumination sensor 330 of FIGS. 3 and 6), a display (e.g., the display module 160 of FIG. 1 and the display 210 of FIGS. 2, 3, and 4) including display driving circuitry (e.g., the display driving circuitry 230 of FIGS. 2, 3, 4, 7, 8, and 9), memory (e.g., the memory 130 of FIG. 1) storing instructions, a first processor (e.g., the processor 120 or the main processor 121 of FIG. 1, and the first processor 310 of FIGS. 2, 3, 4, 7, 8, and 9), and a second processor (e.g., the processor 120 of FIG. 1, and the second processor 320 of FIGS. 2, 3, 4, 7, 8, and 9).

According to an embodiment, the instructions, when executed by at least one of the first processor or the second processor individually or collectively, may cause the electronic device to, based on the sleep state of the first processor being released, set a first region-of-interest set (e.g., the first region-of-interest set 610 of FIG. 6) including a plurality of regions of interest on the display, obtain first color information for the first region-of-interest set, and compensate an image displayed on the display based on the obtained first color information.

According to an embodiment, the instructions may be configured to, when executed by at least one of the first processor or the second processor individually or collectively, cause the electronic device to, based on identifying that the image is stopped during release of the sleep state, set a second region-of-interest set (e.g., the second region-of-interest set 620 of FIG. 6) including a plurality of regions of interest on the display before entering the sleep state, and obtain the first color information for the first region-of-interest set.

According to an embodiment, the instructions may be configured to, when executed by at least one of the first processor or the second processor individually or collectively, cause the electronic device to, based on entering the sleep state, obtain second color information for the second region-of-interest set, and compensate the image based on the first color information and the second color information.

According to an embodiment, the instructions may be further configured to, when executed by at least one of the first processor or the second processor individually or collectively, cause the electronic device to, based on the image being changed during the sleep state, release the sleep state and set the first region-of-interest set on the display, based on the image being stopped before setting of the first region-of-interest set is completed, re-enter the sleep state without setting the second region-of-interest set, obtain the first color information for the first region-of-interest set after re-entering the sleep state, and compensate the image based on the obtained first color information.

According to an embodiment, the instructions may be further configured to, when executed by at least one of the first processor or the second processor individually or collectively, cause the electronic device to enter the sleep state, and based on the image being changed before setting of the second region-of-interest set is completed, release the sleep state and set the first region-of-interest set on the display, obtain the first color information for the first region-of-interest set without obtaining the second color information for the second region-of-interest set, and compensate the image based on the obtained first color information.

According to an embodiment, the instructions may be configured to, when executed by at least one of the first processor or the second processor individually or collectively, cause the electronic device to: when a change in the image occurs, release the sleep state, and enter the sleep state when the image is stopped for a specified time after the sleep state is released.

According to an embodiment, the first region-of-interest set includes a plurality of regions of interest, and the plurality of regions of interest may be set as areas smaller than a hole (e.g., the hole 601 of the illumination sensor 330 of FIG. 6) of the illumination sensor based on location information including specified coordinate values, and the second region-of-interest set includes a plurality of regions of interest, and the plurality of regions of interest may be set as areas larger than or equal to the hole of the illumination sensor based on location information including specified coordinate values.

According to an embodiment, the instructions may be configured to, when executed by at least one of the first processor or the second processor individually or collectively, cause the electronic device to, based on the sleep state being released, request, by the first processor, the display driving circuitry to set the first region-of-interest set on the display, transmit, by the first processor, first notification information regarding a request for setting the first region-of-interest set to the second processor, during release of the sleep state, periodically obtain, by the second processor, first color information corresponding to the first region-of-interest set from the display driving circuitry, and compensate the image based on the obtained first color information.

According to an embodiment, the instructions may be configured to, when executed by at least one of the first processor or the second processor individually or collectively, cause the electronic device to: based on entering the sleep state, request, by the first processor, the display driving circuitry to set the second region-of-interest set on the display, transmit, by the first processor, second notification information regarding a request for setting the second region-of-interest set to the second processor, obtain, by the second processor, first color information corresponding to the first region-of-interest set from the display driving circuitry, based on entering the sleep state, obtain second color information corresponding to the second region-of-interest set from the display driving circuitry, and compensate the image based on the first color information and the second color information.

According to an embodiment, the instructions may be further configured to, when executed by at least one of the first processor or the second processor individually or collectively, cause the electronic device to, during the sleep state, compensate, by the second processor, the image based on the first color information and the second color information, and thereafter maintain a standby state until a time point at which the sleep state is released.

According to an embodiment, the instructions may be further configured to, when executed by at least one of the first processor or the second processor individually or collectively, cause the electronic device to, based on identifying a first situation in which the image is stopped before setting of the first region-of-interest set is completed, request, by the first processor, the display driving circuitry to set the first region-of-interest set on the display, transmit, by the first processor, first notification information regarding a request for setting the first region-of-interest set to the second processor, during the sleep state, obtain, by the second processor, first color information corresponding to the first region-of-interest set from the display driving circuitry, and compensate the image based on the obtained first color information.

According to an embodiment, the instructions may be configured to, when executed by at least one of the first processor or the second processor individually or collectively, cause the electronic device to, based on identifying a second situation in which the sleep state is released before a specified time after entering the sleep state and setting the second region-of-interest set, request, by the first processor, the display driving circuitry to change the second region-of-interest set, which is set on the display, to the first region-of-interest set, transmit, by the first processor, first notification information regarding a request for setting the first region-of-interest set to the second processor, during release of the sleep state, obtain, by the second processor, the first color information for the first region-of-interest set from the display driving circuitry without obtaining the second color information, and compensate the image based on the obtained first color information.

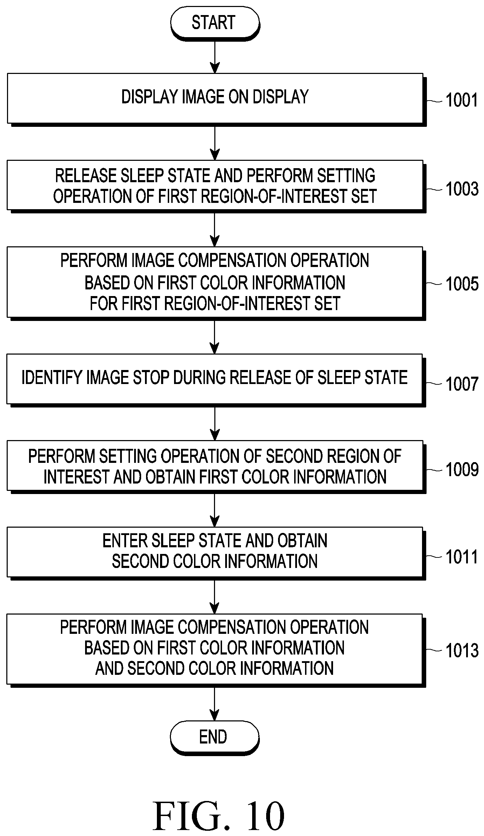

FIG. 10 is a flowchart illustrating an example of an operation method in an electronic device according to an embodiment. In the following embodiment, operations may be performed sequentially, but are not necessarily performed sequentially. For example, the order of the operations may be changed, and at least two operations may be performed in parallel.

Referring to FIG. 10, in an operation 1001, the electronic device (e.g., the electronic device 101 of FIGS. 1, 3, and 4) according to an embodiment may display (e.g., reproduce or provide) an image on a display (e.g., the display module 160 of FIGS. 1 and 2 and/or the display 210 of FIGS. 2 and 3).

In operation 1003, based on an image change occurring, the electronic device may release the sleep state (hibernation), and perform an operation for setting a first region-of-interest set (e.g., the first region-of-interest set 610 of FIG. 6) on the display (hereinafter referred to as a setting operation) in a state in which the sleep state is released (e.g., an activated state). Here, the setting operation for the first region-of-interest set may be performed by the display driving circuitry (e.g., the display driving circuitry 230 of FIGS. 2, 3, 4, 7, 8, and 9) of the electronic device in response to receiving a request for setting the first region-of-interest set (e.g., the first region-of-interest set 610 of FIG. 6) from the first processor. The operation of releasing the sleep state may be performed by the first processor. The first processor of the electronic device may request the display driving circuitry to set the first region-of-interest set. The first processor of the electronic device may transmit first notification information regarding the request to the second processor. Without being limited thereto, upon receiving a request for setting the first region-of-interest set from the first processor, the display driving circuitry may transmit the first notification information to the second processor. For example, the first notification information may include identification information (e.g., "1" or "set1") indicating the first region-of-interest set. The first region-of-interest set may include location information (e.g., specified coordinate values) for each of a plurality of regions of interest (e.g., ROI1 and ROI2). The plurality of regions of interest (e.g., ROI1 and ROI2) may be designated as areas (e.g., area magnifications 0.25x and 0.5x) smaller than an area (e.g., an area magnification 1x) of a hole (e.g., the hole 601 of the illumination sensor 330 of FIG. 6) of the illumination sensor.

In operation 1005, the electronic device may compensate the image displayed on the display based on the first color information for the first region-of-interest set. The image compensation may be performed by the second processor of the electronic device, and the second processor may periodically obtain the first color information at a preset period.

In operation 1007, the electronic device may identify that image stop occurs during release of the sleep state.

In operation 1009, based on the image stop occurring, the electronic device may perform an operation of setting a second region-of-interest set (e.g., the region-of-interest set 620 of FIG. 6) including a plurality of regions of interest on the display before entering the sleep state. The first color information for the first region-of-interest set may be obtained before setting of the second region-of-interest set (e.g., the region-of-interest set 620 of FIG. 6) is completed (e.g., before the coordinate setting time elapses). Here, the second region-of-interest set may include location information (e.g., specified coordinate values) for each of a plurality of regions of interest (e.g., ROI3 and ROI4). The plurality of regions of interest (e.g., ROI3 and ROI4) may be designated as areas (e.g., area magnifications 1x and 2x) larger than or equal to the area (e.g., an area magnification 1x) of the hole of the illumination sensor. The setting operation for the second region-of-interest set may be performed by the first processor. The electronic device may request the display driving circuitry to set the second region-of-interest set and transmit second notification information regarding the request to the second processor, by the first processor. Without being limited thereto, upon receiving a request for setting the second region-of-interest set from the first processor, the display driving circuitry may transmit the second notification information to the second processor. For example, the second notification information may include identification information (e.g., "2" or "set2") indicating the second region-of-interest set.

In operation 1011, the electronic device may identify that the first processor enters the sleep state, and obtain the second color information for the second region-of-interest set based on entering the sleep state.

In an operation 1013, the electronic device may compensate the image based on the obtained second color information and the first color information obtained in operation 1009. According to an embodiment, during the sleep state, the electronic device may compensate, by the second processor, the image based on the first color information and the second color information, and thereafter maintain a standby state until a time point at which the sleep state is released.

Although the flowchart of operations in FIG. 10 illustrates that the operation ends for convenience of description, when the sleep state is released again from the sleep state, operations 1003 to 1005 may be repeatedly performed, and then, when an event for entering the sleep state again (e.g., image stop) occurs, operations 1005 to 1013 may be repeatedly performed.

Although not described in the operations of FIG. 10, according to an embodiment, the electronic device may identify occurrence of an end event for operations for image compensation (e.g., the display is in an off state (OFF) or image reproduction on the display is ended) after the operation 1013. As a result of the identification, when the end event occurs, the electronic device may end the operations for image compensation, and otherwise, may perform the operation 1001 again.

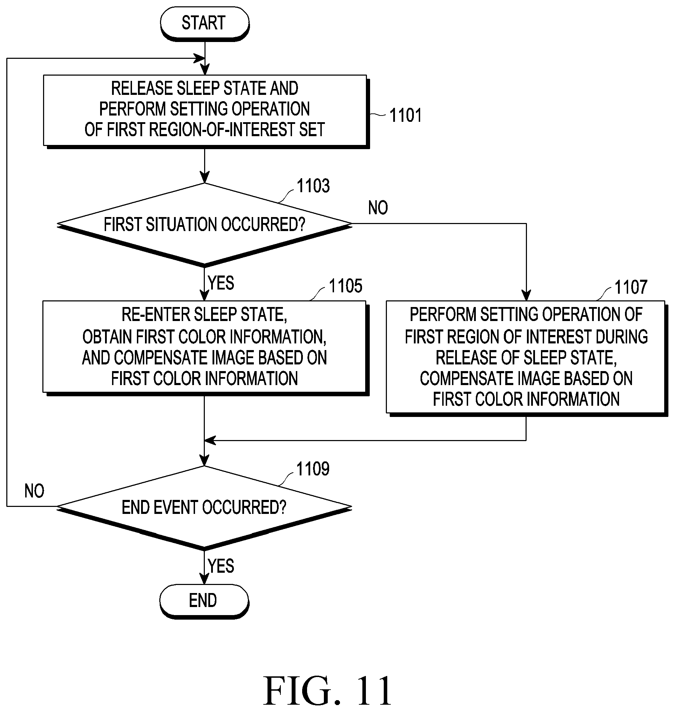

FIG. 11 is a flowchart illustrating an example of an operation method in an electronic device according to an embodiment. In the following embodiment, operations may be performed sequentially, but are not necessarily performed sequentially. For example, the order of the operations may be changed, and at least two operations may be performed in parallel.

Referring to FIG. 11, in an operation 1101, the electronic device (e.g., the electronic device 101 of FIGS. 1, 3, and 4) according to an embodiment may release the sleep state and perform an operation of setting (e.g., changing, applying, or writing) the first region-of-interest set, based on an image displayed (e.g., reproduced or provided) on the display (e.g., the display module 160 of FIG. 1 and the display 210 of FIGS. 2, 3, and 4) being changed during the sleep state (hibernation). When the sleep state is released, the electronic device may request the display driving circuitry (e.g., the display driving circuitry 230 of FIGS. 2, 3, 4, 7, 8, and 9) to set the first region-of-interest set, and transmit first notification information regarding the request to the second processor (e.g., the processor 120 of FIG. 1, and the second processor 320 of FIGS. 2, 3, 4, 7, 8, and 9), by the first processor (e.g., the processor 120 of FIG. 1, and the first processor 310 of FIGS. 2, 3, 4, 7, 8, and 9). Without being limited thereto, upon receiving a request for setting the first region-of-interest set from the first processor, the display driving circuitry may transmit the first notification information to the second processor. For example, the first notification information may include identification information (e.g., "1" or "set1") indicating the first region-of-interest set. The display driving circuitry may receive a request for setting the first region-of-interest set from the first processor and perform an operation for setting the first region-of-interest set on the display. The display driving circuitry may set (e.g., change or write) regions of interest included in the first region-of-interest set on the display and, when the coordinate application time elapses, actually apply the location information (e.g., coordinate values) of the regions of interest included in the first region-of-interest set to the display and complete the setting operation of the first region-of-interest set.

In operation 1103, the electronic device may identify, by the first processor, whether a first situation in which the image is stopped before setting of the first region-of-interest set is completed (e.g., the time from the first region-of-interest set setting request time to the time when 2 frames have passed after image stop < 100 ms) occurs. As a result of the identification, when the first situation occurs, the electronic device may perform an operation 1105, and otherwise, may perform an operation 1107.

In operation 1105, the electronic device may re-enter the sleep state by the first processor without setting the second region-of-interest set by the display driving circuitry, obtain the first color information for the first region-of-interest set after re-entering the sleep state by the second processor, and compensate the image based only on the obtained first color information. Thereafter, the electronic device may perform an operation 1109. Image compensation may increase accuracy when the second color information for the second region-of-interest set 620 is added only after the first color information for the first region-of-interest set 610, which is the center value (e.g., a COPR value of the first region of interest) of the hole of the illumination sensor, is secured before entering the sleep state. Accordingly, in the situation (e.g., the first situation) in which the first color information of the first region-of-interest set 610 is not secured, the electronic device 101 enters the sleep state without changing the region of interest (e.g., coordinates), so that the second processor of the electronic device may perform the image compensation operation using only the first region-of-interest set 610 without (e.g., forgoing) obtaining the second color information of the second region-of-interest set 620. According to an embodiment, because a request for setting the second region-of-interest set is not received (e.g., input) from the first processor within the minimum coordinate application time by the display driving circuitry, the display driving circuitry of the electronic device may maintain the set first region-of-interest set 610 without change of the region-of-interest set. The electronic device may periodically check the first color information (e.g., a COPR value) for the first region-of-interest set at a specified period (e.g., about 160 ms) by the display driving circuitry, and perform image compensation using only the first color information (e.g., a COPR value) for the first region-of-interest set periodically obtained from the display driving circuitry, by the second processor.

In operation 1107, the electronic device may perform the setting operation for setting the first region-of-interest set (e.g., the first region-of-interest set 610 of FIG. 6) on the display in a state in which the sleep state is released, by the second processor, and perform image compensation based on the first color information obtained in the state in which the sleep state is released. Thereafter, the electronic device may perform the operation 1109.

In operation 1109, the electronic device may identify, by the second processor, occurrence of an end event for operations for image compensation (e.g., the display is in an off state (OFF) or image reproduction on the display is ended). As a result of the identification, when the end event occurs, the electronic device may end the operations for image compensation, and otherwise, may perform the operation 1101 again.

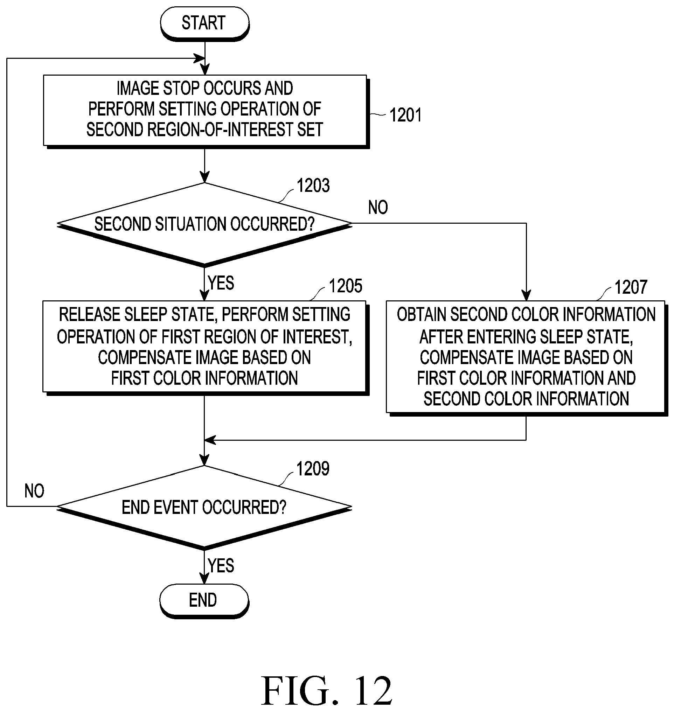

FIG. 12 is a flowchart illustrating an example of a method for operating an electronic device according to an embodiment. In the following embodiment, operations may be performed sequentially, but are not necessarily performed sequentially. For example, the order of the operations may be changed, and at least two operations may be performed in parallel.

Referring to FIG. 12, in an operation 1201, the electronic device (e.g., the electronic device 101 of FIGS. 1, 3, and 4) according to an embodiment may perform an operation for setting (e.g., changing, applying, or writing) the second region-of-interest set (e.g., the second region-of-interest set 620 of FIG. 6), based on image stop occurring in a state in which the sleep state (hibernation) is released (e.g., an activated state). The first processor (e.g., the processor 120 of FIG. 1, and the first processor 310 of FIGS. 2, 3, 4, 7, 8, and 9) of the electronic device may request the display driving circuitry (e.g., the display driving circuitry 230 of FIGS. 2, 3, 4, 7, 8, and 9) to set (e.g., change, apply, or write) the second region-of-interest set. According to an embodiment, the display driving circuitry of the electronic device may transmit second notification information to the second processor (e.g., the processor 120 of FIG. 1, and the second processor 320 of FIGS. 2, 3, 4, 7, 8, and 9) for notifying that setting (e.g., changing or writing) of the second region-of-interest set has been requested by the first processor. Without being limited thereto, after the first processor requests the display driving circuitry to set the first region-of-interest set, the first processor may transmit the second notification information to the second processor. For example, the second notification information may include identification information (e.g., "2" or "set2") indicating the second region-of-interest set. The electronic device may obtain the first color information for the first region-of-interest set (e.g., the first region-of-interest set 610 of FIG. 6) from the display driving circuitry, by the second processor. The display driving circuitry may set the requested second region-of-interest set and apply actual coordinate values of regions of interest based on location information (e.g., location information of each of regions of interest (ROI1 to ROI4) of FIG. 6) of a plurality of regions of interest included in the second region-of-interest set after the coordinate application time elapses. Accordingly, the coordinate values of the regions of interest may not be applied to the display before the coordinate application time (e.g., before the setting operation of the second region-of-interest set is completed).

In operation 1203, the electronic device may identify, by the first processor, whether a second situation in which an image change occurs (e.g., an image change event is received) before the coordinate application time, based on entering the sleep state by the first processor and setting regions of interest for the second region-of-interest set by the display driving circuitry, occurs. As a result of the identification, when the second situation occurs, the electronic device may perform an operation 1205, and otherwise, may perform an operation 1207.

In operation 1205, when the electronic device identifies the second situation by the first processor, the electronic device may release the sleep state, perform an operation for setting (e.g., changing, applying, or writing) the first region-of-interest set by the display driving circuitry, obtain the first color information for the first region-of-interest set by the second processor, and perform image compensation based on the obtained first color information. According to an embodiment, the electronic device may request the display driving circuitry to set (e.g., change, apply, or write) the first region-of-interest set by the first processor, and transmit first notification information to the second processor by the first processor for notifying that setting (e.g., changing or writing) of the first region-of-interest set has been requested. Without being limited thereto, upon receiving a request for setting the first region-of-interest set from the first processor, the display driving circuitry may transmit the first notification information to the second processor. According to an embodiment, because a request for setting the first region-of-interest set is received again before the coordinate application time, the display driving circuitry may maintain the setting of the first region-of-interest set without applying actual coordinates of regions of interest for the second region-of-interest set. The electronic device may periodically obtain the first color information for the first region-of-interest set and perform image compensation based on the obtained first color information, by the second processor.

In operation 1207, the electronic device may obtain the second color information for the second region-of-interest set after entering the sleep state and perform image compensation based on the first color information and the second color information, by the second processor. Thereafter, the electronic device may perform an operation 1209.

In operation 1209, the electronic device may identify, by the second processor, occurrence of an end event for operations for image compensation (e.g., the display is in an off state (OFF) or image reproduction on the display is ended). As a result of the identification, when the end event occurs, the electronic device may end the operations for image compensation, and otherwise, may perform the operation 1201 again.

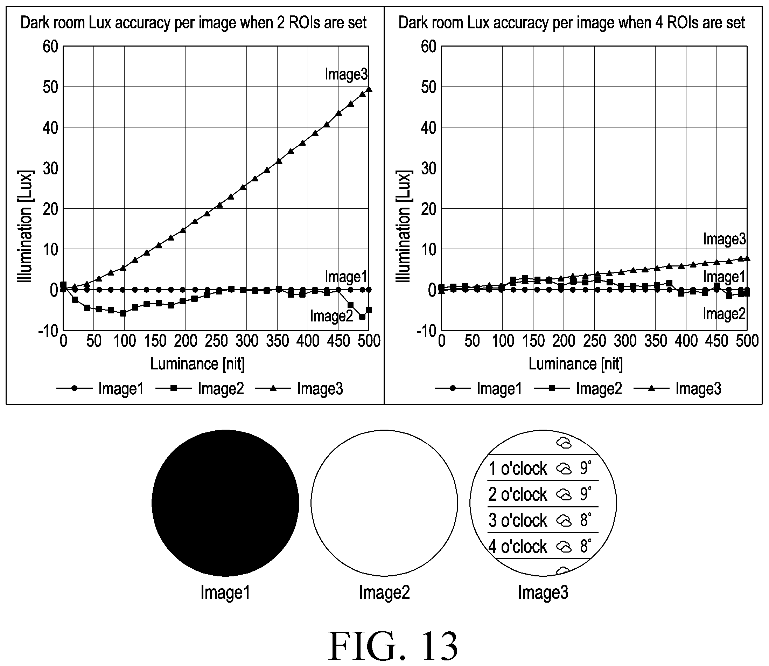

As illustrated in graphs of FIG. 13, the disclosure may identify that image compensation accuracy may be increased when compensating an image using 4 regions of interest compared to when using 2 regions of interest, through the above-described method of operations of FIGS. 11 to 12. The disclosure may additionally secure color information by changing and setting a region-of-interest set including regions of interest according to situations (e.g., switching coordinate values), and may increase illumination sensor image compensation accuracy even when a small number of regions of interest are used in the display driving circuitry for cost reduction in electronic devices such as low-cost models or accessory models, and may secure cost competitiveness by reducing the number of regions of interest used in the display driving circuitry. Further, various effects directly or indirectly identified through the present document may be provided. The effects obtainable from the disclosure are not limited to the above-mentioned effects, and other effects not mentioned are clearly understood by those of ordinary skill in the art to which the disclosure belongs from the description below.

According to an embodiment, a method for operating an electronic device (e.g., the electronic device 101 of FIGS. 1 to 4) may include an operation of setting a first region-of-interest set (e.g., the first region-of-interest set 610 of FIG. 6) including a plurality of regions of interest on a display (e.g., the display module 160 of FIG. 1 and the display 210 of FIGS. 2, 3, and 4) of the electronic device based on a sleep state (hibernation) of a first processor (e.g., the processor 120 or the main processor 121 of FIG. 1, and the first processor 310 of FIGS. 2, 3, 4, 7, 8, and 9) of the electronic device being released, an operation of obtaining first color information for the first region-of-interest set and compensating an image displayed on the display based on the obtained first color information, during release of the sleep state, an operation of setting a second region-of-interest set (e.g., the second region-of-interest set 620 of FIG. 6) including a plurality of regions of interest on the display before entering the sleep state and obtaining the first color information for the first region-of-interest set, based on identifying that the image is stopped during release of the sleep state, and an operation of obtaining second color information for the second region-of-interest set based on entering the sleep state, and compensating the image based on the first color information and the second color information.

According to an embodiment, the method may further include an operation of releasing the sleep state and setting the first region-of-interest set on the display, based on the image being changed during the sleep state, an operation of re-entering the sleep state without setting the second region-of-interest set, based on identifying a first situation in which the image is stopped before setting of the first region-of-interest set is completed, and an operation of obtaining the first color information for the first region-of-interest set after re-entering the sleep state and compensating the image based on the obtained first color information.

According to an embodiment, the method may further include an operation of entering the sleep state and releasing the sleep state and setting the first region-of-interest set, based on identifying a second situation in which the image is changed before setting of the second region-of-interest set is completed, and an operation of obtaining the first color information for the first region-of-interest set without obtaining the second color information for the second region-of-interest set and compensating the image based on the obtained first color information.

According to an embodiment, the first region-of-interest set includes a plurality of regions of interest, and the plurality of regions of interest may be set as areas smaller than a hole (e.g., the hole 601 of the illumination sensor 330 of FIG. 6) of an illumination sensor of the electronic device based on location information including specified coordinate values.

According to an embodiment, the second region-of-interest set includes a plurality of regions of interest, and the plurality of regions of interest may be set as areas larger than or equal to the hole of the illumination sensor based on location information including specified coordinate values.

According to an embodiment, the operation of setting the first region-of-interest set on the display of the electronic device may include an operation of requesting, by the first processor, the display driving circuitry to set the first region-of-interest set on the display based on the sleep state being released, and an operation of transmitting, by the first processor, first notification information regarding a request for setting the first region-of-interest set to the second processor.

According to an embodiment, the operation of compensating the image displayed on the display based on the first color information may include an operation of periodically obtaining, by the second processor, the first color information corresponding to the first region-of-interest set from the display driving circuitry, during release of the sleep state, and an operation of compensating the image based on the obtained first color information.

According to an embodiment, the operation of setting the second region-of-interest set including a plurality of regions of interest on the display before entering the sleep state may include an operation of requesting, by the first processor, the display driving circuitry to set the second region-of-interest set on the display based on entering the sleep state, an operation of transmitting, by the first processor, second notification information regarding a request for setting the second region-of-interest set to the second processor, and an operation of obtaining, by the second processor, the first color information corresponding to the first region-of-interest set from the display driving circuitry.

According to an embodiment, the operation of compensating the image based on the first color information and the second color information may include an operation of obtaining the second color information corresponding to the second region-of-interest set from the display driving circuitry based on entering the sleep state, and an operation of compensating the image based on the first color information and the second color information.

According to an embodiment, the method may further include an operation of compensating, by the second processor, the image based on the first color information and the second color information, and thereafter maintaining a standby state until a time point at which the sleep state is released, during the sleep state.

According to an embodiment, the operation of re-entering the sleep state may include an operation of re-entering, by the first processor, the sleep state without requesting setting of the second region-of-interest set, based on identifying a first situation in which the image is stopped before setting of the first region-of-interest set is completed, and an operation of transmitting, by the first processor, first notification information regarding a request for setting the first region-of-interest set to the second processor.

According to an embodiment, the operation of releasing the sleep state and setting the first region-of-interest set on the display may include an operation of requesting, by the first processor, the display driving circuitry to change the second region-of-interest set, which is set on the display, to the first region-of-interest set, based on identifying a second situation in which the sleep state is released before a specified time after entering the sleep state and setting the second region-of-interest set, an operation of transmitting, by the first processor, first notification information regarding a request for setting the first region-of-interest set to the second processor, and an operation of refraining, by the second processor, from obtaining the second color information during release of the sleep state.

According to an embodiment, in a non-transitory storage medium storing a program, the program may include executable instructions that, when executed by at least one of a first processor (e.g., the processor 120 or the main processor 121 of FIG. 1, and the first processor 310 of FIGS. 2, 3, 4, 7, 8, and 9) or a second processor (e.g., the processor 120 or the auxiliary processor 123 of FIG. 1, and the second processor 320 of FIGS. 2, 3, 4, 7, 8, and 9) of an electronic device (e.g., the electronic device 101 of FIGS. 1 to 4), cause the electronic device to perform an operation of setting a first region-of-interest set including a plurality of regions of interest on a display (e.g., the display module 160 of FIG. 1 and the display 210 of FIGS. 2, 3, and 4) of the electronic device based on a sleep state of the first processor of the electronic device being released, an operation of obtaining first color information for the first region-of-interest set (e.g., the first region-of-interest set 610 of FIG. 6) and compensating an image displayed on the display based on the obtained first color information, during release of the sleep state, an operation of setting a second region-of-interest set (e.g., the second region-of-interest set 620 of FIG. 6) including a plurality of regions of interest on the display before entering the sleep state and obtaining the first color information for the first region-of-interest set, based on identifying that the image is stopped during release of the sleep state, and an operation of obtaining second color information for the second region-of-interest set based on entering the sleep state, and compensating the image based on the first color information and the second color information.

The embodiments disclosed herein are proposed for description and understanding of the disclosed technology and does not limit the scope of the disclosure. Accordingly, the scope of the disclosure should be interpreted as including all changes or various embodiments based on the technical spirit of the disclosure.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
sensor circuitry (176) including an illumination sensor (330);
a display (160, 210) including display driving circuitry;
memory (130) storing instructions;
a first processor (121, 310); and
a second processor (123, 320),
wherein the instructions, when executed by at least one of the first processor or the second processor individually or collectively, cause the electronic device to:
based on a sleep state of the first processor being released, set, on the display, a first region-of-interest set including a plurality of regions of interest, obtain first color information for the first region-of-interest set, and compensate an image displayed on the display based on the obtained first color information;
based on identifying that the image is stopped during release of the sleep state, set, on the display, a second region-of-interest set including a plurality of regions of interest before entering the sleep state, and obtain the first color information for the first region-of-interest set; and
based on entering the sleep state, obtain second color information for the second region-of-interest set, and compensate the image based on the first color information and the second color information.

2. The electronic device of claim 1, wherein the instructions, when executed by at least one of the first processor or the second processor individually or collectively, cause the electronic device to:
based on the image being changed during the sleep state, release the sleep state and set the first region-of-interest set on the display;
based on the image being stopped before setting of the first region-of-interest set is completed, re-enter the sleep state without setting the second region-of-interest set; and
obtain the first color information for the first region-of-interest set after re-entering the sleep state, and compensate the image based on the obtained first color information.

3. The electronic device of claim 1 or 2, wherein the instructions, when executed by at least one of the first processor or the second processor individually or collectively, cause the electronic device to:
enter the sleep state, and based on the image being changed before setting of the second region-of-interest set is completed, release the sleep state and set the first region-of-interest set on the display; and
obtain the first color information for the first region-of-interest set without obtaining the second color information for the second region-of-interest set, and compensate the image based on the obtained first color information.

4. The electronic device of any one of claims 1 to 3, wherein the instructions, when executed by at least one of the first processor or the second processor individually or collectively, cause the electronic device to:
when a change in the image occurs, release the sleep state; and
enter the sleep state when the image is stopped for a specified time after the sleep state is released,
wherein the first region-of-interest set includes a plurality of regions of interest, and wherein each of the plurality of regions of interest is set as an area smaller than a hole of the illumination sensor, based on location information including specified coordinate values, and
wherein the second region-of-interest set includes a plurality of regions of interest, and wherein each of the plurality of regions of interest is set as an area larger than or equal to the hole of the illumination sensor, based on location information including specified coordinate values.

5. The electronic device of any one of claims 1 to 4, wherein the instructions, when executed by at least one of the first processor or the second processor individually or collectively, cause the electronic device to:
based on the sleep state being released, request, by the first processor, the display driving circuitry to set the first region-of-interest set on the display;
transmit, by the first processor, first notification information regarding a request for setting the first region-of-interest set to the second processor; and
during release of the sleep state, periodically obtain, by the second processor, the first color information corresponding to the first region-of-interest set from the display driving circuitry, and compensate, by the second processor, the image based on the obtained first color information.

6. The electronic device of any one of claims 1 to 5, wherein the instructions, when executed by at least one of the first processor or the second processor individually or collectively, cause the electronic device to:
based on entering the sleep state, request, by the first processor, the display driving circuitry to set the second region-of-interest set on the display;
transmit, by the first processor, second notification information regarding a request for setting the second region-of-interest set to the second processor;
obtain, by the second processor, the first color information corresponding to the first region-of-interest set from the display driving circuitry;
based on entering the sleep state, obtain the second color information corresponding to the second region-of-interest set from the display driving circuitry, and compensate the image based on the first color information and the second color information; and
during the sleep state, compensate, by the second processor, the image based on the first color information and the second color information, and thereafter maintain, by the second processor, a standby state until a time point at which the sleep state is released.

7. The electronic device of any one of claims 1 to 6, wherein the instructions, when executed by at least one of the first processor or the second processor individually or collectively, cause the electronic device to:
based on identifying a first situation in which the image is stopped before setting of the first region-of-interest set is completed, request, by the first processor, the display driving circuitry to set the first region-of-interest set on the display;
transmit, by the first processor, the first notification information regarding the request for setting the first region-of-interest set to the second processor; and
during the sleep state, obtain, by the second processor, the first color information corresponding to the first region-of-interest set from the display driving circuitry, and compensate, by the second processor, the image based on the obtained first color information.

8. The electronic device of claim 1, wherein the instructions, when executed by at least one of the first processor or the second processor individually or collectively, cause the electronic device to:
based on identifying a second situation in which the sleep state is released before a specified time after entering the sleep state and setting the second region-of-interest set, request, by the first processor, the display driving circuitry to change the second region-of-interest set, which is set on the display, to the first region-of-interest set;
transmit, by the first processor, the first notification information regarding the request for setting the first region-of-interest set to the second processor; and
during release of the sleep state, obtain, by the second processor, the first color information for the first region-of-interest set from the display driving circuitry without obtaining the second color information, and compensate, by the second processor, the image based on the obtained first color information.

9. A method for operating an electronic device (101), the method comprising:
based on a sleep state of a first processor (121, 310) of the electronic device being released, setting a first region-of-interest set including a plurality of regions of interest on a display (160, 210) of the electronic device;
during release of the sleep state, obtaining first color information for the first region-of-interest set, and compensating an image displayed on the display based on the obtained first color information;
based on identifying that the image is stopped during release of the sleep state, setting a second region-of-interest set including a plurality of regions of interest on the display before entering the sleep state, and obtaining the first color information for the first region-of-interest set; and
based on entering the sleep state, obtaining second color information for the second region-of-interest set, and compensating the image based on the first color information and the second color information.

10. The method of claim 9, further comprising:
based on the image being changed during the sleep state, releasing the sleep state and setting the first region-of-interest set on the display;
based on identifying a first situation in which the image is stopped before setting of the first region-of-interest set is completed, re-entering the sleep state without setting the second region-of-interest set; and
obtaining the first color information for the first region-of-interest set after re-entering the sleep state, and compensating the image based on the obtained first color information.

11. The method of claim 9 or 10, further comprising:
entering the sleep state, and based on identifying a second situation in which the image is changed before setting of the second region-of-interest set is completed, releasing the sleep state and setting the first region-of-interest set; and
obtaining the first color information for the first region-of-interest set without obtaining the second color information for the second region-of-interest set, and compensating the image based on the obtained first color information,
wherein the first region-of-interest set includes a plurality of regions of interest, and wherein each of the plurality of regions of interest is set as an area smaller than a hole of an illumination sensor of the electronic device, based on location information including specified coordinate values, and
wherein the second region-of-interest set includes a plurality of regions of interest, and wherein each of the plurality of regions of interest is set as an area larger than or equal to the hole of the illumination sensor, based on location information including specified coordinate values.

12. The method of any one of claims 9 to 11, wherein setting the first region-of-interest set on the display of the electronic device includes:
based on the sleep state being released, requesting, by the first processor, display driving circuitry to set the first region-of-interest set on the display; and
transmitting, by the first processor, first notification information regarding a request for setting the first region-of-interest set to a second processor,
wherein compensating the image displayed on the display based on the first color information includes:
during release of the sleep state, periodically obtaining, by the second processor, the first color information corresponding to the first region-of-interest set from the display driving circuitry; and
compensating the image based on the obtained first color information.

13. The method of any one of claims 9 to 12, wherein setting the second region-of-interest set including a plurality of regions of interest on the display before entering the sleep state includes:
based on entering the sleep state, requesting, by the first processor, display driving circuitry to set the second region-of-interest set on the display;
transmitting, by the first processor, second notification information regarding a request for setting the second region-of-interest set to a second processor; and
obtaining, by the second processor, the first color information corresponding to the first region-of-interest set from the display driving circuitry,
wherein compensating the image based on the first color information and the second color information includes:
based on entering the sleep state, obtaining the second color information corresponding to the second region-of-interest set from the display driving circuitry; and
compensating the image based on the first color information and the second color information, and
wherein the method further includes: during the sleep state, compensating, by the second processor, the image based on the first color information and the second color information, and thereafter maintaining, by the second processor, a standby state until a time point at which the sleep state is released.

14. The method of any one of claims 9 to 13, wherein the re-entering the sleep state includes:
based on identifying a first situation in which the image is stopped before setting of the first region-of-interest set is completed, re-entering, by the first processor, the sleep state without requesting setting of the second region-of-interest set; and
transmitting, by the first processor, first notification information regarding a request for setting the first region-of-interest set to a second processor, wherein the releasing the sleep state and setting the first region-of-interest set on the display includes:
based on identifying a second situation in which the sleep state is released before a specified time after entering the sleep state and setting the second region-of-interest set, requesting, by the first processor, display driving circuitry to change the second region-of-interest set, which is set on the display, to the first region-of-interest set;
transmitting, by the first processor, the first notification information regarding the request for setting the first region-of-interest set to the second processor; and
during release of the sleep state, refraining, by the second processor, from obtaining the second color information.

15. A non-transitory storage medium storing a program, wherein the program, when executed by at least one of a first processor (121, 310) or a second processor (123, 320) of an electronic device (101), includes executable instructions causing the electronic device to perform:
based on a sleep state of the first processor of the electronic device being released, setting a first region-of-interest set including a plurality of regions of interest on a display (160, 210) of the electronic device;
during release of the sleep state, obtaining first color information for the first region-of-interest set, and compensating an image displayed on the display based on the obtained first color information;
based on identifying that the image is stopped during release of the sleep state, setting a second region-of-interest set including a plurality of regions of interest on the display before entering the sleep state, and obtaining the first color information for the first region-of-interest set; and
based on entering the sleep state, obtaining second color information for the second region-of-interest set, and compensating the image based on the first color information and the second color information.
